# EUROPEAN PATENT SPECIFICATION

(11) **EP 1 782 406 B1**
(45) Date of publication and mention of the grant of the patent: **08.10.2008**
(21) Application number: 05856859.3
(22) Date of filing: 27.06.2005
(51) Int. Cl.: G08B 13/196, H04N 5/14, H04N 7/18, G08B 13/194

(54) **MONITORING DEVICES**
ÜBERWACHUNGSVORRICHTUNGEN
DISPOSITIFS DE SURVEILLANCE

(30) Priority: 28.06.2004 US 878952
(43) Date of publication of application: 09.05.2007
(60) Divisional application: 08101351.8
(73) Proprietor: Honeywell International Inc., Morristown NJ 07960 (US)
(72) Inventor: HAIGH, Karen, Z., Greenfield, Minnesota 55375 (US); MORELLAS, Vassilios, Plymouth, Minnesota 55446 (US); KIFF, Liana, M., Excelsior, Minnesota 55331 (US)
(74) Representative: Haley, Stephen
(86) International application number: PCT/US2005/023002
(87) International publication number: WO 2006/085960

(56) References cited:
- EP-A- 1 117 081
- WO-A-97/49061
- WO-A-03/088157
- US-A1- 2002 118 862
- US-A1- 2004 008 254
- PATENT ABSTRACTS OF JAPAN vol. 2002, no. 11, 6 November 2002 (2002-11-06) & JP 2002 204445 A (MITSUBISHI HEAVY IND LTD), 19 July 2002 (2002-07-19)

## Description

### Field of the Invention

The present invention relates generally to the field of monitoring devices and systems. More specifically, the present invention relates to monitoring devices having on-board image processing capabilities.

### Background of the Invention

Monitoring devices are used in a wide variety of applications for monitoring activity in one or more spaces. One type of monitoring device is a simple motion detector, which detects and then reports whether motion has been detected within the field of view (FOV) of the detector. In general, such motion detectors are part of a motion detection system that simply reports whether motion has been detected without typically providing other information. Since these motion detectors typically do not capture images, they have limited use in identifying what is actually going on in the monitored space, but can be of particular use in applications where privacy is demanded.

An example of a more sophisticated monitoring system is a video surveillance system. Video surveillance systems typically include a number of video cameras that are used to relay video images of the monitored space to a centralized controller/processor, which can then be provided to a display screen and/or video recording device. Video surveillance systems can have a number of drawbacks, however. First, they can be relatively expensive. Second, privacy concerns over the transmission of images to a centralized remote location can limit the use of such systems. For example, in some homes, office buildings, hospitals, elder care facilities, and other locations, for example, the transmission of images to a monitor, screen or recording device can cause apprehension, discomfort, and/or other privacy concerns for the occupants, preventing their installation in such locations. In certain cases, the transmission of images to a remote location may be prohibited by law, or may pose a security risk if intercepted by an unauthorized third party.

US 2004 0008254 discloses a camera which can evaluate an image to generate an alarm signal.

The present invention pertains to monitoring devices having on-board image processing capabilities. Associated systems and methods for monitoring one or more objects are also described herein.

A monitoring device in accordance with the present invention includes an image detector for viewing one or more objects within a field of view, an on-board image processor adapted to determine one or more object output parameters corresponding to one or more object characteristics of the one or more objects in the field of view, and a communication means for transmitting an imageless output signal to a remote location, such as a fire station, a police station, an Emergency Medical Service (EMS) provider, a security operator, a customer service center, and/or any other desired location, wherein said imageless output signal includes at least one of said object output parameters.

In particular, according to the present invention there is provided a monitoring device for monitoring one or more objects located within a field of view, comprising: an image detector; an on-board image processor adapted to determine one or more object output parameters corresponding to one or more object characteristics of the one or more objects; and communication means for transmitting an imageless output signal to a remote location, the monitoring device being characterised in that the imageless output signal includes at least one of said object output parameters and an object identifier output parameter corresponding to each of the one or more objects.

In certain embodiments, the monitoring device can be programmed to run one or more routines that can be used to compute various parameters relating to one or more tracked objects, the status of the monitoring device, as well as other environmental factors. In one such embodiment, for example, the monitoring device can be configured to output a detector output parameter, an environment output parameter, a significance output parameter, a confidence output parameter, and/or an object output parameter computed by the image processor. The number and/or type of output parameters can vary depending on the particular application, as desired.

There is also provided a method for monitoring one or more objects located within a field of view using a monitoring device equipped with an on-board image processor, the method comprising the steps of: capturing an image of the one or more objects; processing the image to determine one or more object output parameters corresponding to one or more object characteristics of the one or more objects; and transmitting an imageless output signal to a remote location, the method being characterised in that the imageless output signal includes at least one of said object output parameters and an object identifier output parameter corresponding to each of the one or more objects.

In another embodiment, the monitoring device can be configured to determine if one or more of the computed parameters are of significance, and, if so, to output that parameter to a remote location.

In another embodiment, the monitoring device can be programmed to detect if a particular override event has occurred, justifying the output of an image to the remote location.
FIG. 1 is a diagrammatic view of an illustrative monitoring system employing multiple monitoring devices for monitoring one or more objects within a building;
FIG. 2 is a block diagram of a monitoring device in accordance with an illustrative embodiment of the present invention;
FIG. 3 is a block diagram showing an illustrative method of processing signals received from the on-board image processor of FIG. 2;
FIG. 4 is a block diagram showing the on-board image processor of FIG. 2 outputting a number of object parameters;
FIG. 5 is a block diagram of an illustrative monitoring system employing multiple monitoring devices;
FIG. 6 is a block diagram of another illustrative monitoring system employing multiple monitoring devices;
Figure 7 is a flow chart showing an illustrative method for monitoring one or more objects using a monitoring device equipped an on-board image processor; and
Figure 8 is another flow chart of the illustrative method of Figure 7, wherein the method further includes a step of determining whether an image override event has occurred.

### Detailed Description of the Invention

The following description should be read with reference to the drawings, in which like elements in different drawings are numbered in like fashion. The drawings, which are not necessarily to scale, depict illustrative embodiments and are not intended to limit the scope of the invention. Although examples of various operational steps are illustrated in the various views, those skilled in the art will recognize that the many of the examples provided have suitable alternatives that can be utilized. Moreover, while specific applications are described throughout the disclosure, it should be understood that the present invention could be employed in other applications where motion detection is desired.

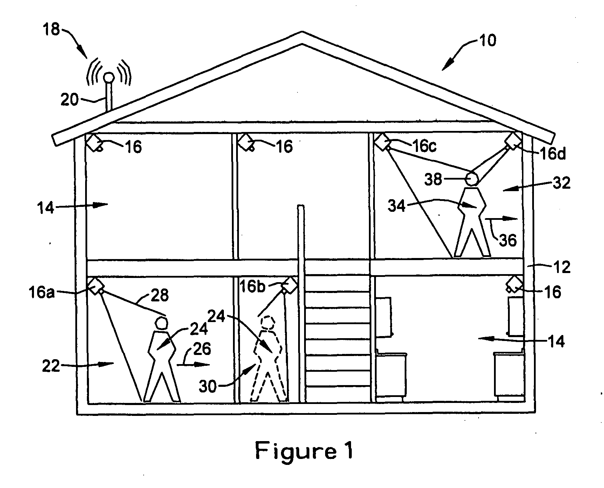

Figure 1 is a diagrammatic view of an illustrative monitoring system 10 employing multiple monitoring devices for monitoring one or more objects within a building 12. Building 12, illustratively a nursing home or assisted living center, includes a number of rooms 14 each equipped with one or more monitoring devices 16, which, in accordance with an illustrative embodiment of the present invention, can be configured to output an imageless signal 18 that can then be transmitted via the monitoring system 10 to a remote location using an antennae 20 or other suitable transmission means. The imageless signal 18 can be transmitted from each monitoring device 16 of the system 10, to an Emergency Medical Service (EMS) provider, a fire station, a police station, a security operator, or any other suitable receiver (e.g. an operator, software, hardware, etc.) for monitoring the health and safety of the occupants as well as other desired items. In some applications, the imageless signal 18 can also be transmitted to various locations within the building 12 for monitoring via a user interface. While a wireless transponder (e.g. antennae 20) is shown in Figure 1, it should be understood that the imageless signal 18 can be transmitted by any suitable means, including, for example, a wire, cable, a local area network (LAN), a cellular phone, telephone line, pager, two-way radio, computer, hand-held PALM device, etc.

In some cases, the monitoring devices 16 can be operatively coupled to each other to permit the tracking of one or more objects within each room 14, or to track movement of an object from one room 14 to another. A first monitoring device 16a located in a lower-left room 22 of the building 12, for example, can be configured to track an individual 24 moving in a direction indicated generally by arrow 26. The first monitoring device 16a can be configured to initially scan the entire area of the room 22, and then pan and/or tilt in the direction of the individual 24 once their presence is detected. In certain embodiments, the first monitoring device 16a can also be configured to zoom-in on the object using, for example, a vari-focal lens, as indicated generally by dashed lines 28.

A second monitoring device 16b located in an adjoining room 30 of the building 12 can be configured to track motion 26 of the individual 24 from the first room 22 into the second room 30. The second monitoring device 16b can have an overlapping field of view with the first monitoring device 16a to permit the smooth transitioning and indexing from one monitoring device to the next without encountering any discontinuity; however this is not required. As with the first monitoring device 16a, the second monitoring device 16b can include a set of pan, tilt, and zoom controls to facilitate tracking of the individual 24 within its field of view, if desired.

In certain rooms 14 within the building 12, multiple monitoring devices 16 can be employed to facilitate the tracking of multiple objects, or to differentiate between various features of a single object. In the illustrative monitoring system 10 of Figure 1, for example, a wide-angle monitoring device 16c is shown employed within an upper-right room 32 of the building 12 to track general motion of an individual 34 in the direction indicated generally by arrow 36. A second, more focused monitoring device 16d located within the room 32, in turn, can be configured to focus on the individual's face 36 or some other desired feature. When coordinated in this matter, both monitoring devices 16c,16d can be tasked to acquire different information about the individual 34, as desired. In certain embodiments, for example, the wide-angle monitoring device 16c can be tasked to track and obtain general information about the individual's motion (e.g. velocity, path, etc.) whereas the more focused monitoring device 16d can be tasked to acquire information about the individual's identity or orientation.

In some embodiments, the monitoring devices 16 can be adapted to communicate with each other to permit monitoring of all or selective rooms 14 within the building 12, as desired. The monitoring devices 16 can be either hard-wired to each other via an electrical cable, fiber optic cable, or other suitable conduit, or can include a wireless transponder/receiver that can be used to wirelessly transmit and receive signals to and from each monitoring device 16 within the system 10.

In certain embodiments, the monitoring devices 16 can be networked with other components of the monitoring system 10 including, for example, fire or carbon monoxide detectors, window or door detectors, proximity sensors, ambient light sensors, temperature sensors, electrical load switches, glucose sensors, sleep detectors, seismic sensors, magnetic strip sensors, etc. to further detect movement or the occurrence of other events within the building 12. The monitoring devices 16 can be coupled to the other system components via a local area network (LAN), a wide area network (WAN), a public switch telecommunications network (PSTN), or other suitable connection means, as desired. In certain embodiments, a computer terminal 37 or other suitable system controller equipped with a user interface can be provided to coordinate the functioning of one or more components within the monitoring system 10.

In use, the monitoring system 10 can be used monitor the health and safety of occupants living alone, and, if necessary, contact a caregiver, security guard or other third-party operator. In certain applications, for example, the monitoring system 10 can be used to monitor individuals at risk for injury such as the elderly or disabled. The monitoring devices 16 can be coordinated in a manner to detect, for example, whether an accidental fall has occurred, to detect the lack of an expected activity (e.g. eating or cooking), or to provide for home automation by activating lights, opening doors, etc. The monitoring devices 16 can also be used to discretely monitor bathroom activity, or provide an assessment of whether the individual is acting in a different manner than normal, indicative of a stroke or other emergency event.

The monitoring system 10 can also be used in fire and security applications to identify motion in areas where video would normally be inappropriate. In certain security applications, for example, the monitoring system 10 could be used to detect motion in restrooms, dressing rooms, or other areas where the transmission of images is normally restricted. In some fire detection applications, the monitoring system 10 could be employed to determine if a fire has occurred by detecting the presence of a flame, heat, or other such indicator, and then contact the fire department and alert the emergency personnel responding to the fire of the presence of trapped victims in areas within the building 12 that would otherwise not be monitored effectively. The monitoring system 10 can also be used in other applications such as that described in co-pending Application Serial Number 10/341,335, entitled "A Method for Monitoring, Recognizing, Supporting, and Responding to the Behavior of an Actor," which is incorporated herein by reference in its entirety.

As discussed previously, each monitoring device 16 can be configured to output an imageless signal 18 that can then be transmitted by the monitoring system 10 to a remote location, thus ensuring the privacy and security of the occupants. In certain cases, however, it may be desirable and/or necessary to transmit an image signal to the remote location upon the occurrence of an event. If, for example, one or more of the monitoring devices 16 within the monitoring system 10 determine that an individual has fallen down, it may be desirable for the system 10 to transmit an image signal to emergency response personnel along with an alarm indicating that a fall has occurred. In such event, the monitoring system 10 can be configured to temporarily transmit an image signal, allowing the response personnel to confirm the actual occurrence of the event, and take appropriate action.

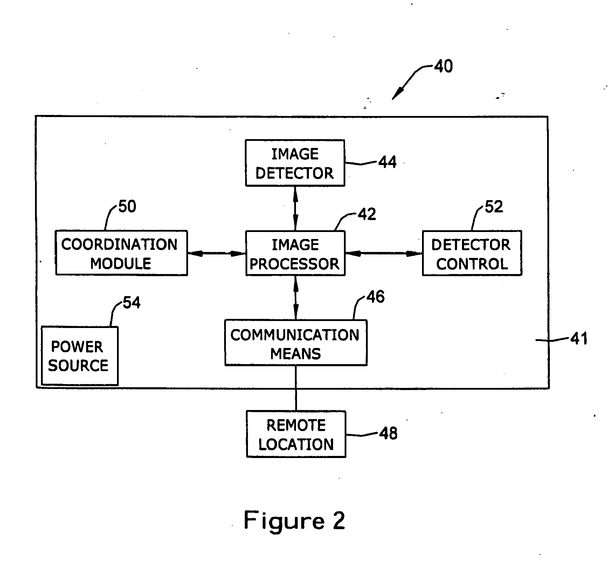

Figure 2 is a block diagram of a monitoring device 40 in accordance with an illustrative embodiment of the present invention. Monitoring device 40 may include a housing 41 that contains a number of internal components for detecting and tracking one or more objects within a field of view. An on-board image processor 42 contained within the housing 41 can be configured to receive a series of images from an image detector 44, and then run one or more routines to determine a number of imageless output parameters corresponding to one or more objects within the monitoring device's field of view. The routines could be used for detecting and identifying specific types of motion and/or objects. In home security applications, for example, the monitoring device 40 could be programmed to recognize and ignore the movements of small animals or inanimate objects such as fans, curtains, drapes, etc. while still detecting movement of other objects such as the opening of doors, windows, etc.

The image detector 44 may employ one or more infrared and/or visible light cameras capable of acquiring images that can be used by the image processor 42 to determine several object-related parameters. In certain embodiments, the monitoring device 40 can be configured to employ both infrared and visible light cameras, allowing the monitoring device 40 to differentiate between animate and inanimate objects.

The monitoring device 40 can be equipped with communication means 46 that can be used to transmit signals to and from a remote location 48 such as a computer terminal, relay station, or the like. The communication means 46 may include an antenna, electrical wire, fiber optic cable, or other suitable transmission means for transmitting signals back and forth between the remote location 48 and monitoring device 40. In certain embodiments, the communication means 48 can be configured to receive commands from the remote location 48 or some other desired device and/or source that can be used to upload monitoring device routines, as needed, or to diagnose or check images received by the image detector 44 to verify the proper functioning of the monitoring device 40.

A coordination module 50 of the monitoring device 40 can be configured to coordinate the use of other monitoring devices 40 within the monitoring system, if any. In some embodiments, for example, the coordination module 50 can be utilized to synchronize tracking of multiple monitoring devices 40 within the system in order to anticipate movement of the objects across multiple fields. The coordination module 50 can also be used to coordinate the monitoring device 40 to function with other system components (*e.g*. proximity sensors, temperature sensors, etc.) in the system. In certain embodiments, for example, the coordination module 50 can be configured to synchronize the frame rate of the monitoring device 40 with other monitoring devices 40 and/or components in the monitoring system.

The monitoring device 40 may further include a detector control unit 52 for controlling the operation of the image detector 44. The detector control unit 52 can, for example, be operatively coupled to a set of pan, tilt and zoom controls that can be used control the tracking and focusing of the image detector 44. The detector control 52 can also be used to adjust various other settings (*e.g*. sensitivity, operation time, etc.), as desired. The detector control 52 as well as other components of the monitoring device 40 can be powered via a power source 54 such as a battery or power line.

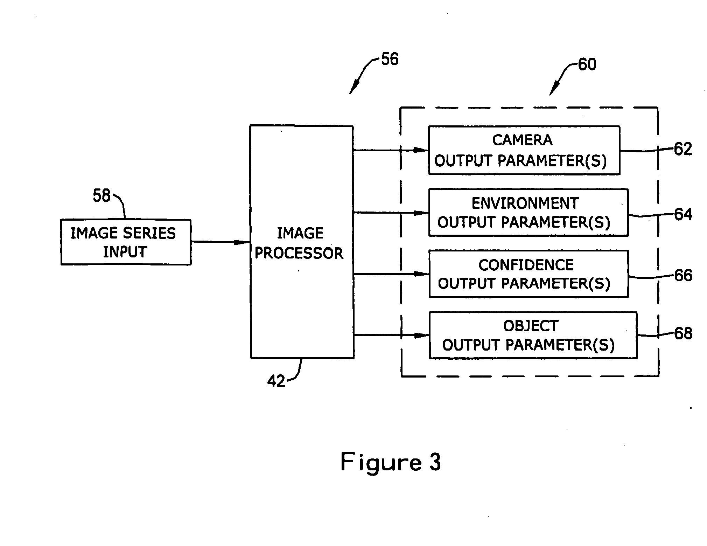

Figure 3 is a block diagram showing an illustrative method 56 of processing signals received from the on-board image processor 42 of Figure 2. As shown in Figure 3, the image processor 42 can be configured to receive an image series input 58 from the image detector 44, and then run one or more routines that can be used to determine a number of parameters relating to one or more detected objects. Example image processing routines may include, but are not limited to, edge detection, neural networks, temporal analysis of successive images, fuzzy logic techniques, background subtraction and/or combinations thereof.

The image processor 42 can be programmed to run a number of special modes that can be used to task the monitoring device 40 in a particular manner. In certain embodiments, for example, the image processor 42 can be pre-programmed to run a separate vacation mode routine, sick mode routine, sleep mode routine or other such routine, allowing a user to adjust the types of information acquired and/or processed by the image processor 42. In a sleep mode routine, for example, the monitoring device 40 can be configured to trigger an intruder alarm response if motion is detected at a period of time when the actor is typically asleep.

The image processor 42 can be configured to compute a number of imageless output parameters 60 that can then be transmitted via the monitoring system to a remote location for monitoring. In the illustrative embodiment depicted in Figure 3, for example, the image processor 42 can be configured to output a DETECTOR output parameter 62, an ENVIRONMENT output parameter 64, a SIGNIFICANCE output parameter 65, a CONFIDENCE output parameter 66, and an OBJECT output parameter 68, which can be used to monitor one or more objects without transmitting an image from the monitoring device 40. As will be understood in greater detail below, each of these output parameters 62,64,65,66,68 can include one or more parameters relating to the functioning of the detector, the environment in which the detector is located, the confidence level in the output parameters of the device of the device, as well as various factors relating to each object being tracked.

The DETECTOR output parameter 62 outputted by the image processor 42 can be used to relay status information about the monitoring device 40 and any associated components. Example status information may include the identity of the particular monitoring device 40 providing the signal, the location of the detector, the pan/tilt/zoom settings of the detector, the amount of ambient light detected by the detector, the frame rate of the detector, the aspect ratio of the detector, the sensitivity settings of the detector, the power status of the detector, the date and time of the transmitted signal, as well as other desired information regarding the status and operation of the detector. If, for example, the monitoring device 40 detects motion within its FOV, the image processor 44 can be configured to output a unique identification code identifying the monitoring device 40 that detected the motion, along with the date and time in which the motion was detected. In some embodiments, self-diagnostic information can also be provided to check the operational status of the monitoring device 40, if desired.

An ENVIRONMENT output parameter 64 outputted by the image processor 42 can be used to provide information about the environment surrounding the monitoring device 40. In certain embodiments, for example, the image processor 42 can be configured to output the amount of ambient light detected, which can then be utilized to adjust the settings of the monitoring device 40, if necessary. If, for example, the image processor 42 determines that the level of ambient light surrounding the device is relatively low, the monitoring device 40 can be configured to increase the light sensitivity of the detector.

A SIGNIFICANCE output parameter 65 outputted by the monitoring device 40 may be used to alert a caregiver, security operator, customer service representative, computer, or other such receiver of the occurrence of a particular event. If, for example, an individual tracked by the monitoring device 40 abruptly stops for a certain period of time, or is oriented in an unusual position within a particular room (e.g. a restroom), the image processor 42 can be configured to transmit a SIGNIFICANCE output parameter 65 that can be utilized by the monitoring system to alert the receiver that an event requiring immediate response may have occurred. The SIGNIFICANCE output parameter 65 may comprise a binary signal such as "on" or "off", or may comprise an alphanumeric message such as "fall detected".

A CONFIDENCE output parameter 66 outputted by the monitoring device 40 may be used to provide an indication of the level of confidence that an event has occurred. In certain embodiments, the CONFIDENCE output parameter 66 may also indicate the percentage likelihood (*e*.*g*. 50%, 75%, 100%, etc.) that the event triggering the response is genuine. One or more differing confidence values can be provided for each object detected by the monitoring system as well as for each output parameter 60 outputted by the monitoring device 40. If, for example, the image processor 42 is 80% confident that an object detected is an individual and 60% confident that the object is moving at a rate of 5m/s, the monitoring device 40 can be configured to output a CONFIDENCE output parameter 66 indicating "80% confidence <OBJECT is PERSON>", and "60% confidence <OBJECT VELOCITY = 5m/s"). Similar information can be provided for multiple objects detected by the monitoring device 40. The number and type of values provided will, of course, depend on the particular application.

An OBJECT output parameter 68 of the image processor 42 can be configured to convey various information regarding objects detected by the monitoring device 40. As with the SIGNIFICANCE and CONFIDENCE output parameters 65,66, the information outputted via the OBJECT output parameter 68 may be application specific, relaying information necessary for a caregiver, security operator or other receiver to respond when an event has occurred. As discussed in greater detail below, such parameter can be provided, for example, to inform the receiver of the velocity, direction, size, temperature, orientation, as well as other such parameters corresponding to one or more objects being tracked. An identification code (e.g. "object 1", "object 2", etc.) corresponding to each object tracked can also be outputted to maintain consistency between each consecutive parameter outputted.

The output from the monitoring device 40 can be configured to prompt the monitoring system to trigger an alarm when a particular event has occurred, or when one or more objects are detected. The alarm can be audible, visual, or some combination of both. In certain embodiments, for example, a visual alarm can be provided by a flashing light emitting diode (LED) on a display panel, or by displaying an annotation on a video monitor. An aural alarm such as a siren or electronic voice announcer can also be provided, if desired. The visual and/or aural alarm may be provided in conjunction with the SIGNIFICANCE output parameter 65 to inform the receiver of the significance of the event.

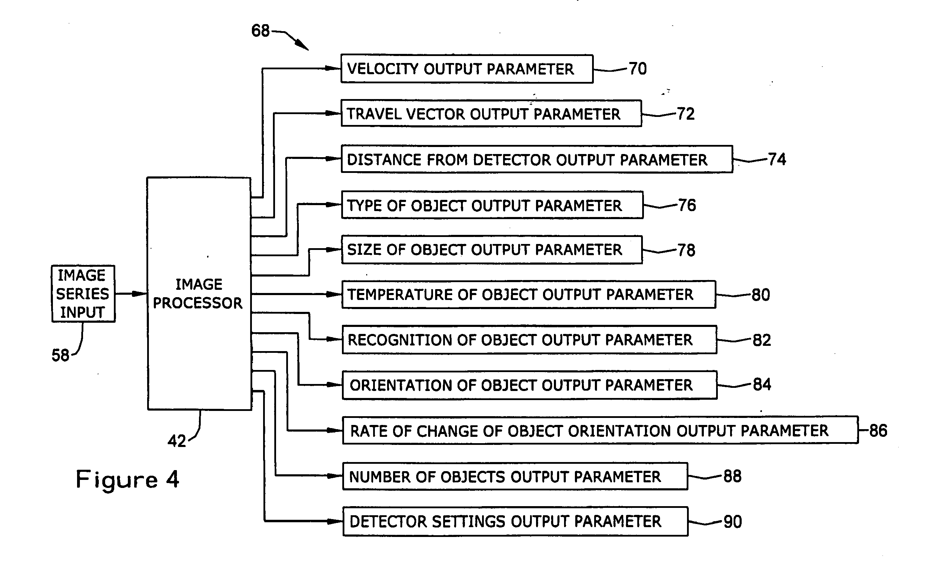

Figure 4 is a block diagram showing the on-board image processor 42 of Figure 2 outputting an illustrative group of OBJECT parameters 68 to a monitoring system. As shown in Figure 4, image processor 42 can be configured to output a VELOCITY output parameter 70 and a TRAVEL VECTOR output parameter 72, which relate, respectively, to the velocity and path of each object detected by the monitoring device 40. If, for example, the monitoring device 40 tracks an individual moving at a velocity of 1 mile-per-hour (inph) in a particular path, the image processor 42 can be configured to compute and output a VELOCITY output parameter 70 of "1 mph" along with a TRAVEL VECTOR output parameter 72 indicating the direction in which the object is traveling. As with other parameters described herein, the VELOCITY and TRAVEL VECTOR output parameters 70,72 can include separate parameters relating to multiple objects tracked by the monitoring device 40. If, for example, the monitoring device 10 is currently tracking two objects, a separate velocity and travel vector parameter can be provided for each individual object, allowing the monitoring system to distinguish between parameters outputted for each object.

A DISTANCE FROM DETECTOR output parameter 74 of the monitoring device 40 can be used to provide information relating to the distance of each tracked object from the monitoring device 40, or the distance of the object from some other object or geographic feature. If, for example, the image processor 42 determines that the tracked object is located 10 feet away from the monitoring device 40, a DISTANCE FROM DETECTOR output parameter 74 of "10 feet" can be outputted from the monitoring device 40.

A LOCATION OF OBJECT output parameter 75 of the monitoring device 40 can be used to provide information relating to the location of each tracked object within the FOV. The image processor 42 can be configured to determine the location of each tracked object, and then output a LOCATION OF OBJECT output parameter 75 indicating that location of the tracked object along with an identifier parameter identifying the object being tracked. The manner in which the monitoring device 40 expresses the LOCATION OF OBJECT output parameter 75 may vary depending on the particular application. In certain embodiments, for example, the LOCATION OF OBJECT output parameter 75 can be expressed as coordinates (e.g. Cartesian coordinates), pixel range, or other suitable location identifier. In those embodiments utilizing Cartesian coordinates, for example, a CAD design showing the locations of the system cameras and/or the approximate distances of the objects from each respective camera could be employed, if desired.

A TYPE OF OBJECT output parameter 76 and SIZE OF OBJECT output parameter 78 of the monitoring device 40 may be outputted by the image processor 42 to provide information about the type and size of each tracked object. Such parameters 76,78 can be provided, for example, to inform a security guard whether the type of object detected is animate or inanimate, whether the object tracked has appreciably increased in size over a period of time (e.g. indicative of shoplifting), whether the object tracked is a human or an animal, and so forth. As with other output parameters described herein, the image processor 42 can be configured to trigger an alarm signal if a particular type and/or size of object is detected.

A TEMPERATURE OF OBJECT output parameter 80 may be determined by the image processor 42 to provide an indication of the temperature of each tracked object within the field of view. Such parameter may be useful for triggering a fire alarm if heat is detected, or can be used to differentiate between animate or inanimate objects detected by the monitoring device 40. In such case, the image processor 44 can be configured to trigger an alarm or other alert informing the operator that the individual may need assistance.

In certain applications, it may be desirable to confirm the identity of each object tracked by the monitoring device 40. In such cases, the image processor 42 can be configured to run a routine that recognizes the identity of the tracked object, and output a RECOGNITION OF OBJECT output parameter 82 that provides the operator with the identity of the individual. Such parameter 84, for example, could be utilized for security applications wherein it may be desirable to confirm the identity of an individual prior to entrance within a restricted room or building.

An ORIENTATION OF OBJECT output parameter 84 and RATE OF CHANGE OF OBJECT ORIENTATION output parameter 86 can be further outputted by the image processor 42. If, for example, an individual has fallen down and is in need of assistance, the image processor 42 can be configured to output an ORIENTATION OF OBJECT output parameter 84 of "horizontal", indicating that the tracked individual may require assistance.

A NUMBER OF OBJECTS output parameter 88 may be provided to indicate the number of objects detected within the monitoring device's 40 field of view. If, for example, three individuals are detected by the monitoring device 40, the image processor 42 can be configured to output a NUMBER OF OBJECTS parameter 88 of "3". Such output parameter 88 can be used in conjunction with other output parameters to facilitate tracking of multiple objects by the monitoring system, if desired. In certain embodiments, the output from the monitoring device 40 can cause the monitoring system to activate an alarm or other alert if the number of objects detected reaches a certain minimum or maximum threshold value.

An OBJECT IDENTIFIER output parameter 90 can be provided for each object detected to facilitate tracking of multiple objects within the monitoring device's 40 field of view, and/or to facilitate tracking of multiple objects using other devices within the monitoring system. If, for example, the image processor 42 determines that 2 objects are located within a particular room (*e*.*g*. a bedroom), the monitoring device 40 can be configured to output an OBJECT IDENTIFIER output parameter 90 (e.g. "object 1" and "object 2") for each object detected along with a NUMBER OF OBJECTS output parameter 88 of "2", indicating that two objects of interest are being tracked by the monitoring device 40.

While the embodiment of Figure 4 illustrates some of the possible output parameters that can be determined by the image processor 42, it should be understood that the present invention is not limited as such. Other parameters such as starting position, ending position, path length, distance covered (straight line), start time, end time, duration, average speed, maximum speed, total number of turns, etc. may also be determined using known image processing techniques.

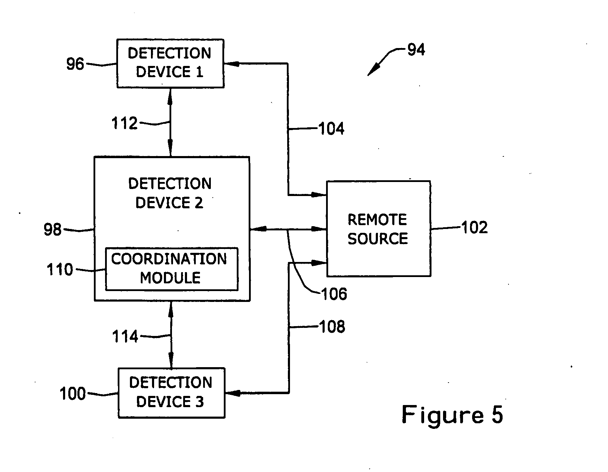

Figure 5 is a block diagram of an illustrative monitoring system 94 employing multiple monitoring devices. Monitoring system 94 includes a first monitoring device 96, a second monitoring device 98, and a third monitoring device 100, each of which can be independently configured to output a respective imageless signal 104,106,108 that can be transmitted either directly or via the monitoring system 94 to a remote location 102 such as a caregiver or security operator. The remote location 102, in turn, can be configured to send a signal to each of the monitoring devices 96,98,100 within the system 94 prompting each to perform a particular action (e.g. motion detection, facial recognition, etc.), if desired.

Each of the monitoring devices 96,98,100 may be configured to communicate with each other to coordinate tracking of one or more objects. In the illustrative embodiment of Figure 5, the second monitoring device 98 includes a coordination module 110 that links each monitoring device 96,98,100 to each other. During operation, the coordination module 110 can be used to calibrate the relative locations of the detectors, task different detectors based on all objects within the detector's field of view, and, in certain cases, predict the future locations of one or more of the objects. In certain embodiments, the coordination module 110 can be configured to accept a user input that can be used to control and/or program each monitoring device 96,98,100 to operate in a desired manner. While three monitoring devices 96,98,100 are illustrated in the embodiment of Figure 5, it should be understood that any number of monitoring devices can be employed, as desired.

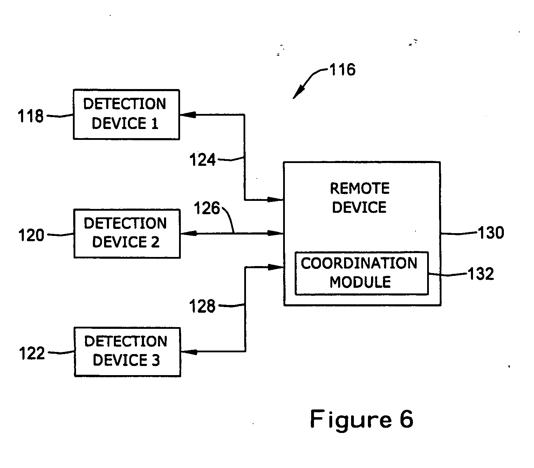

Figure 6 is a block diagram of another illustrative monitoring system 116 employing multiple monitoring devices. Similar to system 94 described above, monitoring system 116 can include a first monitoring device 118, a second monitoring device 120, and a third monitoring device 122, each of which can be independently configured to output a respective imageless signal 124,126,128 that can be transmitted either directly or via the monitoring system 116 to a remote location 130. The remote location 130, in turn, can be configured to send a signal to each of the monitoring devices 118,120,122 within the system 116 prompting each to perform a particular action, if desired.

As can be further seen in Figure 6, the remote location 130 can include a coordination module 132 adapted to coordinate the operation of the various monitoring devices 118,120,122. The coordination module 132 may function in a manner similar to coordination module 110 described above with respect to Figure 5, providing a means to calibrate the relative locations of the detectors, task different detectors based on all objects within the detector's field of view, and predict the future locations of one or more of the objects. As with the embodiment of Figure 5, the coordination module 132 can be configured to accept a user input that can be used to control and/or program each monitoring device 118,120,122 to operate in a desired manner.

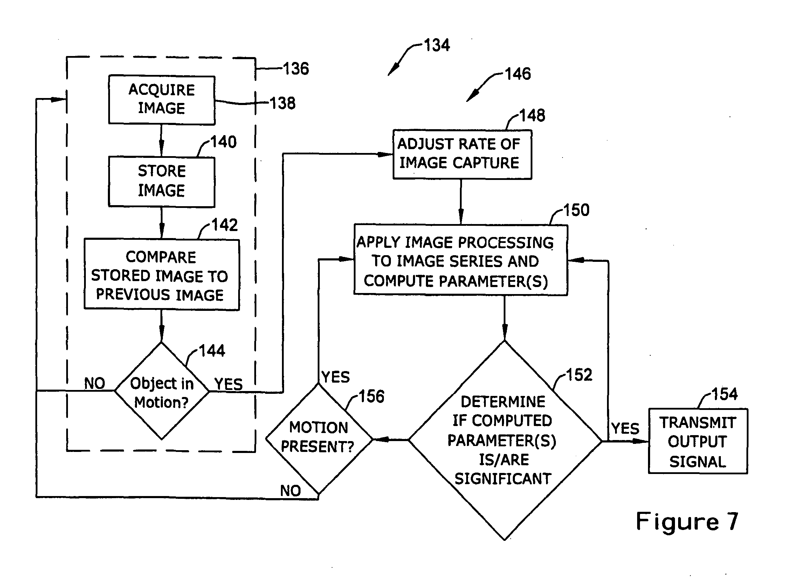

Turning now to Figure 7, an illustrative method 134 for monitoring one or more objects using a monitoring device equipped with an on-board image processor will now be described. Method 134 may begin from an initial state 136 (represented generally by dashed lines) where no object motion has been detected. In this initial state, the monitoring device can be configured operate in a low-power mode such that image frames are processed at a low rate when no significant activity is detected in the field of view.

Beginning with block 142, a temporal image differencing routine can be configured to detect changes indicative of movement and/or the presence of an object. This can be achieved, for example, by processing pixel intensity differences in the three most recent images acquired by a camera or other image detector (block 138) and stored in memory (block 140). If a change is detected between the compared images (decision block 144), the monitoring device can be configured to "wake up" and initiate a higher rate mode, as indicated generally by reference number 146, wherein image frames are processed at a higher frame rate (block 148) to permit the image processor to compute higher-level information about the object. At this step, the monitoring device may also employ image-filtering techniques (*e*.*g*. spatial median filter, dilation, etc.) to filter out certain components of the image signal prior to image processing. Alternatively, if no object motion is detected, the monitoring device can be configured to return to the initial step (*i*.*e*. step 138) and repeat the image differencing process until such motion is detected.

While it anticipated that the higher rate mode 146 be activated upon the detection of motion within the field of view in order to conserve power, an on/off switch or other suitable input means may be provided to permit the monitoring device to operate at the higher rate mode 146 at other desired times. In some embodiments, the monitoring device can be configured to initiate the higher rate mode 146 if motion is anticipated (e.g. via a control signal sent from another monitoring device), or upon the activation of another system component (*e*.*g*. a door or window sensor).

In the illustrative embodiment, once the monitoring device has detected motion of one or more objects, an image-processing step (block 150) may be performed to compute a number of desired parameters relating to one or more objects within the field of view. As discussed herein, the parameters may relate to the detector ID of the monitoring device, the date/time/location of the event and/or object, the significance of the event, and various parameters relating to the movement, orientation, size, identity, temperature or other desired parameter of the tracked object.

As indicated generally by decision block 152, once one or more parameters are computed at step 150, the monitoring device can determine if the computed parameter(s) is/are significant, and if so, transmit an imageless output signal as indicated by block 154. If, for example, the monitoring device determines that there is more than one moving object within the monitoring device's field of view when only one object is anticipated, the monitoring device can be configured to transmit an imageless output signal indicating that more than one moving object has been detected. In certain embodiments, the imageless output signal (block 154) transmitted by the monitoring device may cause the monitoring system to activate a visual and/or aural alarm that can be used to alert an operator that an event may have occurred. The process can then be repeated again with a new set of images.

If none of the computed parameter(s) is/are determined to be significant, the monitoring device can be configured to determine whether motion is still present, as indicated generally by decision block 156. If motion is still detected, the monitoring device can be configured to repeat the image-processing step of block 150 to compute a new set of parameters, otherwise the monitoring device can be configured to revert to the initial state 136 and repeat the image differencing process until such motion is detected.

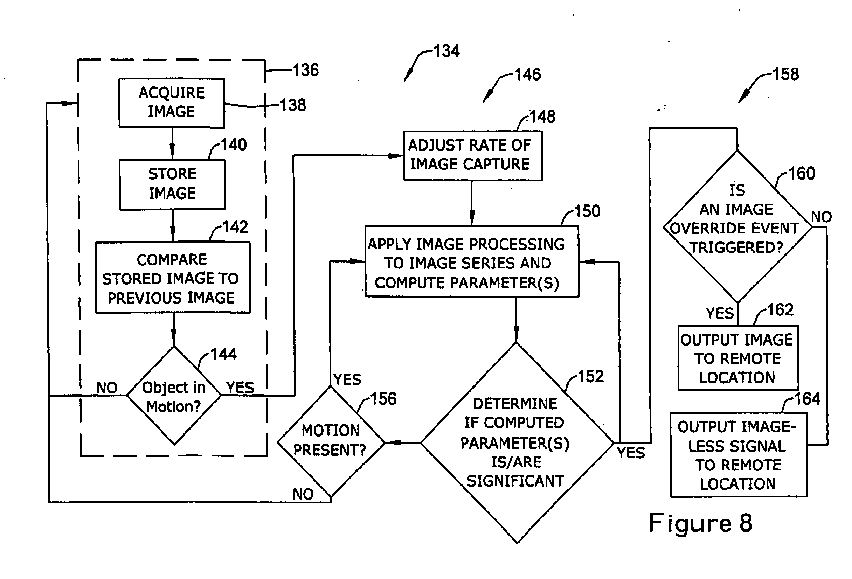

Figure 8 is another flow chart of the illustrative method 134 of Figure 7, wherein the method 134 further includes an optional step of determining whether an image override event has occurred. As shown in Figure 8, once the monitoring device has determined that one or more computed parameters is/are significant at decision block 152, the monitoring device can be configured to initiate a image override routine 158 that determines whether the significance of the computed parameters is sufficient to trigger an override event justifying the transmission of an image or series of images to the remote location. As indicated generally by decision block 160, for example, if an override event is triggered by the computed parameters, the monitoring device can be configured to output an image that can be transmitted via the system to a remote location (block 162) for monitoring by the operator. If, for example, the monitoring device determines that an individual has ceased movement for an unusual period of time, the monitoring system can be configured to output an image to a remote location. In such event, the confirmation of the individual's health and safety may override the general privacy concerns of the individual, justifying the transmission of an image signal to the receiver. Alternatively, if one or more of the computed parameters is not deemed sufficient to trigger an override event, the monitoring system can be configured to output an imageless signal to the remote location, as indicated generally by block 164.

Having thus described the several embodiments of the present invention, those of skill in the art will readily appreciate that other embodiments may be made and used which fall within the scope of the claims attached hereto. Numerous advantages of the invention covered by this document have been set forth in the foregoing description. It will be understood that this disclosure is, in many respects, only illustrative. Changes can be made with respect to various elements described herein without exceeding the scope of the invention.

## Claims

1. A monitoring device (16, 40) for monitoring one or more objects (24, 34) located within a field of view, comprising:
an image detector (44);
an on-board image processor (42) adapted to determine one or more object output parameters (68) corresponding to one or more object characteristics of the one or more objects (24, 34); and
communication means (20, 46) for transmitting an imageless output signal (18) to a remote location (48),
the monitoring device being **characterised in that:**
the imageless output signal (18) includes at least one of said object output parameters (68) and an object identifier output parameter (90) corresponding to each of the one or more objects (24, 34).

2. The monitoring device of claim 1, wherein said at least one object output parameter (68) is selected from group of parameters consisting of a velocity output parameter (70), a travel vector output parameter (72), a distance from detector output parameter (74), a location of object output parameter (75), a type of object output parameter (76), a size of object output parameter (78), a temperature of object output parameter (80), a recognition of object output parameter (82), an orientation of object output parameter (84), a rate of change of orientation output parameter (86), and a number of objects output parameter (88).

3. The monitoring device of claim 1, wherein said imageless output signal (18) further includes at least one of a detector output parameter (62), an environment output parameter (64), a significance output parameter (65), and a confidence output parameter (66).

4. The monitoring device of claim 1, wherein the image detector (44) includes at least one camera, the monitoring device further including a detector control unit (52) for adjusting the settings of the image detector (44).

5. The monitoring device of claim 4, further including a coordination module (50, 110, 132).

6. The monitoring device of claim 5, wherein the coordination module (50,110, 132), is configured to accept a user input for controlling the operation of the monitoring device (16, 40).

7. The monitoring device of claim 1, further including a plurality of monitoring devices (16, 40), wherein the image detector (44) of each device includes at least one camera.

8. A method for monitoring one or more objects (24, 34) located within a field of view using a monitoring device (16, 40) equipped with an on-board image processor (42), the method comprising the steps of:
capturing an image (138) of the one or more objects (24, 34);
processing the image (150) to determine one or more object output parameters corresponding to one or more object characteristics of the one or more objects (24, 34); and
transmitting an imageless output signal (154) to a remote location,
the method being **characterised in that:**
the imageless output signal (18) includes at least one of said object output parameters (68) and an object identifier output parameter (90) corresponding to each of the one or more objects (24, 34).

9. The method of claim 8, further comprising the step of determining whether the one or more computed parameters are significant (152).

10. The method of claim 9, wherein the step of determining whether the one or more computed parameters are significant (152) is prior to the step of transmitting an imageless output signal (154) to a remote location.

## Patentansprüche

1. Überwachungseinrichtung (16, 40) zum Überwachen eines oder mehrerer Objekte (24, 34), die sich in einem Bildfeld befinden, umfassend:
einen Bilddetektor (44);
einen Onboard-Bildprozessor (42), der dafür ausgelegt ist, einen oder mehrere Objektausgangsparameter (68) zu bestimmen, die einer oder mehreren Objekteigenschaften des einen oder der mehreren Objekte (24, 34) entsprechen; und
Kommunikationsmittel (20, 46) zum Senden eines bildlosen Ausgangssignals (18) zu einem entfernten Ort (48),
wobei die Überwachungseinrichtung **dadurch gekennzeichnet ist, daß**
das bildlose Ausgangssignal (18) mindestens einen der Objektausgangsparameter (68) und/oder einen Objektkennungs-Ausgangsparameter (90) entsprechend jedem des einen oder der mehreren Objekte (24, 34) umfaßt.

2. Überwachungseinrichtung nach Anspruch 1, wobei der mindestens eine Objektausgangsparameter (68) aus der folgenden Gruppe von Parametern ausgewählt wird: ein Geschwindigkeits-Ausgangsparameter (70), ein Bewegungsvektor-Ausgangsparameter (72), ein Abstand-vom-Detektor-Ausgangsparameter (74), ein Ort-des-Objekts-Ausgangsparameter (75), ein Typ-des Objekts-Ausgangsparameter (76), ein Größe-des-Objekts-Ausgangsparameter (78), ein Temperatur-des-Objekts-Ausgangsparameter (80), ein Erkennung des Objekts-Ausgangsparameter (82), ein Orientierungdes-Objekts-Ausgangsparameter (84), ein Änderungsgeschwindigkeit-der-Orientierung-Ausgangsparameter (86) und ein Anzahl-der-Objekte-Ausgangsparameter (88).

3. Überwachungseinrichtung nach Anspruch 1, wobei das bildlose Ausgangssignal (18) ferner mindestens einen Detektorausgangsparameter (62), Umgebungs-Ausgangsparameter (64), Signifikanz-Ausgangsparameter (65) oder Konfidenz-Ausgangsparameter (66) umfaßt.

4. Überwachungseinrichtung nach Anspruch 1, wobei der Bilddetektor (44) mindestens eine Kamera umfaßt, wobei die Überwachungseinrichtung ferner eine Detektorsteuereinheit (52) zum Justieren der Einstellungen des Bilddetektors (44) umfaßt.

5. Überwachungseinrichtung nach Anspruch 4, ferner mit einem Koordinationsmodul (50, 110, 132).

6. Überwachungseinrichtung nach Anspruch 5, wobei das Koordinationsmodul (50, 110, 132) dafür ausgelegt ist, eine Benutzereingabe zur Steuerung des Betriebs der Überwachungseinrichtung (16, 40) anzunehmen.

7. Überwachungseinrichtung nach Anspruch 1, ferner mit mehreren Überwachungseinrichtungen (16, 40), wobei der Bilddetektor (44) jeder Einrichtung mindestens eine Kamera umfaßt.

8. Verfahren zum Überwachen eines oder mehrerer Objekte (24, 34), die sich in einem Bildfeld befinden, unter Verwendung einer Überwachungseinrichtung (16, 40), die mit einem Onboard-Bildprozessor (42) ausgestattet ist, wobei das Verfahren die folgenden Schritte umfaßt:
Aufnehmen eines Bildes (138) des einen oder der mehreren Objekte (24, 34);
Verarbeiten des Bildes (150), um einen oder mehrere Objektausgangsparameter zu bestimmen, die einer oder mehreren Objekteigenschaften des einen oder der mehreren Objekte (24, 34) entsprechen; und
Senden eines bildlosen Ausgangssignals (154) zu einem entfernten Ort (48),
wobei das Verfahren **dadurch gekennzeichnet ist, daß**
das bildlose Ausgangssignal (18) mindestens einen der Objektausgangsparameter (68) und/oder einen Objektkennungs-Ausgangsparameter (90) entsprechend jedem des einen oder der mehreren Objekte (24, 34) umfaßt.

9. Verfahren nach Anspruch 8, ferner mit dem Schritt des Bestimmens, ob der eine oder die mehreren berechneten Parameter signifikant sind (152).

10. Verfahren nach Anspruch 9, wobei der Schritt des Bestimmens, ob der eine oder die mehreren berechneten Parameter signifikant sind (152), vor dem Schritt des Sendens eines bildlosen Ausgangssignals (154) zu einem entfernten Ort kommt.

## Revendications

1. Dispositif de surveillance (16, 40) pour surveiller un ou plusieurs objets (24, 34) situés dans un champ de vision, comprenant :
un détecteur d'image (44) ;
un processeur d'images embarqué (42) adapté pour déterminer un ou plusieurs paramètres de sortie d'objet (68) correspondant à une ou plusieurs caractéristiques d'objet des un ou plusieurs objets (24, 34) ; et
un moyen de communication (20, 46) pour transmettre un signal de sortie sans image (18) à un site distant (48),
le dispositif de surveillance étant **caractérisé en ce que :**
le signal de sortie sans image (18) comporte au moins l'un desdits paramètres de sortie d'objet (68) et d'un paramètre de sortie d'identifiant d'objet (90) correspondant à chacun des un ou plusieurs objets (24, 34).

2. Dispositif de surveillance selon la revendication 1, dans lequel ledit au moins un paramètre de sortie d'objet (68) est sélectionné dans un groupe de paramètres consistant en un paramètre de sortie de vitesse (70), un paramètre de sortie de vecteur de déplacement (72), un paramètre de sortie de distance depuis un détecteur (74), un paramètre de sortie d'emplacement d'objet (75), un paramètre de sortie de type d'objet (76), un paramètre de sortie de taille d'objet (78), un paramètre de sortie de température d'objet (80), un paramètre de sortie de reconnaissance d'objet (82), un paramètre de sortie d'orientation d'objet (84), un paramètre de sortie de taux de changement d'orientation (86), et un paramètre de sortie de nombre d'objets (88).

3. Dispositif de surveillance selon la revendication 1, dans lequel ledit signal de sortie sans image (18) comporte en outre au moins l'un d'un paramètre de sortie de détecteur (62), d'un paramètre de sortie d'environnement (64), d'un paramètre de sortie d'importance (65), et d'un paramètre de sortie de confiance (66).

4. Dispositif de surveillance selon la revendication 1, dans lequel le détecteur d'image (44) comporte au moins une caméra, le dispositif de surveillance comportant en outre une unité de commande de détecteur (52) pour ajuster les réglages du détecteur d'image (44).

5. Dispositif de surveillance selon la revendication 4, comportant en outre un module de coordination (50, 110, 132).

6. Dispositif de surveillance selon la revendication 5, dans lequel le module de coordination (50, 110, 132) est configuré pour accepter une entrée d'utilisateur pour commander le fonctionnement du dispositif de surveillance (16, 40).

7. Dispositif de surveillance selon la revendication 1, comportant en outre une pluralité de dispositifs de surveillance (16, 40), dans lequel le détecteur d'image (44) de chaque dispositif comporte au moins une caméra.

8. Procédé de surveillance d'un ou de plusieurs objets (24, 34) situés dans un champ de vision au moyen d'un dispositif de surveillance (16, 40) équipé d'un processeur d'image embarqué (42), le procédé comprenant les étapes suivantes :
capture d'une image (138) des un ou plusieurs objets (24, 34) ;
traitement de l'image (150) afin de déterminer un ou plusieurs paramètres de sortie d'objet correspondant à une ou plusieurs caractéristiques d'objet des un ou plusieurs objets (24, 34) ; et
transmission d'ùn signal de sortie sans image (154) à un site distant,
le procédé étant **caractérisé en ce que :**
le signal de sortie sans image (18) comporte au moins l'un desdits paramètres de sortie d'objet (68) et d'un paramètre de sortie d'identifiant d'objet (90) correspondant à chacun des un ou plusieurs objets (24, 34).

9. Procédé selon la revendication 8, comprenant en outre l'étape de détermination si les un ou plusieurs paramètres calculés sont importants ou non (152).

10. Procédé selon la revendication 9, dans lequel l'étape de détermination si les un ou plusieurs paramètres calculés sont importants ou non (152) est antérieure à l'étape de transmission d'un signal de sortie sans image (154) à un site distant.
